# EUROPEAN PATENT SPECIFICATION

(11) **EP 4 468 886 B1**
(45) Date of publication and mention of the grant of the patent: **22.10.2025**
(21) Application number: 23701444.4
(22) Date of filing: 20.01.2023
(51) Int. Cl.: A24B 13/02, B26D 1/04, B29C 65/08, B26D 7/02, B65B 51/30, B65B 51/22, B29C 65/74, B29C 65/00, B65B 9/12, B65B 29/00, B65B 51/06, B65B 9/207, B65B 61/06, B26D 1/00, A24B 13/00, B29C 65/02, B29L 31/00

(54) **CUTTING UNIT AND METHOD FOR CUTTING A WEB**
SCHNEIDEEINHEIT UND VERFAHREN ZUM SCHNEIDEN EINER BAHN
UNITÉ DE DÉCOUPE ET PROCÉDÉ POUR DÉCOUPER UNE BANDE

(30) Priority: 25.01.2022 EP 22153158
(43) Date of publication of application: 04.12.2024
(73) Proprietor: Swedish Match North Europe AB, 118 85 Stockholm (SE)
(72) Inventor: HAFSTAD, Daniel, 439 62 Frillesås (SE)
(74) Representative: Valea AB
(86) International application number: PCT/EP2023/051331
(87) International publication number: WO 2023/144024

(56) References cited:
- EP-B1- 3 383 746
- WO-A2-2008/146160

## Description

### TECHNICAL FIELD

The present invention relates to a cutting unit and a method for cutting a web of a saliva-permeable packaging material. The present invention further relates to an apparatus and a method for manufacturing a pouched product for oral use.

### BACKGROUND

A pouched product for oral use may be produced by measuring a portion of a filling material, e.g. a smokeless tobacco composition, and enclosing the portion into a packaging material forming a saliva-permeable pouch enclosing the filling material.

US 4,703,765 discloses a device for packaging precise amounts of finely divided tobacco products, such as snuff tobacco or the like, in a packaging material into which snuff portions are injected via a fill tube. A flat web of packaging material is formed into a tubular web around the fill tube. Downstream from the fill tube, welding means are positioned for transverse sealing of the packaging material, and also a cutting section for severing the packaging material in the area of the transverse seal to thus form discrete or individual portion packages. The cutting section consists of a cutting wheel and an anvil wheel, which are in a different speed relation to each other

Pouched products for oral use may alternatively be produced by placing portions of a filling material, such as moist snuff, on a nonwoven web using a pouch packer machine in accordance with the device disclosed in US 6,135,120. This device comprises feeding means for feeding the tobacco material into pockets formed in a rotary portioning wheel for portioning the material into portions, at least one compression means for compressing the tobacco material portions, a unit for advancing a packaging material, such as a nonwoven web, in synchrony with the portions, at least one discharge means for discharging the portions from the pockets to the packaging material, and a forming unit for forming individual portion-packages, i.e. pouched products for oral use, from the discharged portions and the packaging material. At the intended point of discharge of the portions to the packaging material, the packaging material has the form of a tape. The compression means are arranged to compress the portions in a direction which differs from the discharging and the feeding directions. The compression is preferably effected in a direction perpendicular to the discharging and the feeding directions. The compression may be effected in the axial direction of the portioning wheel whereas the feeding and discharging may be effected in the radial direction of the wheel. The tape supporting the discharged tobacco material portions thereon is made to move in a direction away from the portioning wheel while at the same time the tape is folded about the tobacco material portions by folding means. A transverse sealing means in the form of a rotary welding wheel having protruding formations thereon and a severing means in the form of a rotary cutter wheel fitted with cutting knives are positioned downstream from the folding means.

EP 3383746 B1 discloses an apparatus for manufacturing a pouched product for oral use, in which the transverse sealing unit and the separation unit forms a combined unit. The combined unit provides a tubular web with a series of transverse seals by repeated transverse sealing. The transverse sealing is performed by ultrasonic welding. In the combined unit, first and second operation surfaces are configured for simultaneous welding and cutting of the packaging material. The first and second welding surfaces are partly delimited by a cutting edge having an extension direction along the first and second welding surfaces, such that the cutting edge separates the first welding surface from the second welding surface.

The apparatuses of US 4,703,765, US 6,135,120 and EP 3383746 B1 disclose examples of prior art cutting units for cutting a web of saliva-permeable packaging material.

WO 2008/146160 A2 discloses a device according to the preamble of claim 1 for deflecting a loose fill product from the seal zone of a bag and sealing the bag. The device includes a product stopper. The product stopper is adjacent to the sealing element of a bagging machine. The product stopper includes a mount that mounts the product stopper to a bagging machine and a pinching element that pinches a bag proximal to a sealing zone before the bag is sealed by the sealing element at the sealing zone. In one embodiment, the pincher includes a spring loaded mechanism for pinching the bag proximal to the sealing zone. In another embodiment, the pincher includes an air assist mechanism for pinching the bag proximal to the sealing zone. A method of sealing a bag to prevent a product from entering a seal zone of the bag prior to sealing is also disclosed.

Even if there exist a number of known cutting units and methods for cutting a web of saliva-permeable packaging material, as exemplified above, there is still a desire to further improve the cutting unit, also called the separation unit, or at least to provide an alternative. For example, it is desirable that the cut is as clean as possible, such that a risk of having frayed edges and/or fibres hanging out at the cut can be reduced or preferably avoided.

It is further often desirable to have a cutting unit with a low number of movable parts.

### SUMMARY

The object of the present disclosure is to overcome or ameliorate at least one of the disadvantages of the prior art, or to provide a useful alternative.

The object above is achieved by the subject-matter of the independent claims. Embodiments are set forth in the appended dependent claims, in the following description and in the drawings.

The present invention relates to a cutting unit according to claim 1 for cutting a web of a saliva-permeable packaging material, the web being adapted to be advanced in a direction of travel through the cutting unit. The cutting unit comprises a first part having a first cutting edge and a second part having a second cutting edge, the first and second cutting edges being arranged offset to each other and adapted to be on opposite sides of the web when the cutting unit is in a non-operative state. The first and second cutting edges are angled by an angle α relative to each other as seen in a plane being perpendicular to the direction of travel. At least one of the first and second cutting edges is linear translatory movable towards and past the other of the first and second cutting edges in a translation direction being angled, preferably perpendicularly angled, to the direction of travel.

The cutting unit according to the invention may form part of an apparatus for manufacturing a pouched product for oral use. The cutting unit according to the invention may be retrofitted in existing apparatuses for manufacturing pouched products for oral use, where it would be used to separate a pouched product from a subsequent pouched product by cutting and, optionally, also for providing transverse seals, as is further described herein.

The pouched product for oral use comprises a filling material and a saliva-permeable pouch enclosing the filling material, the saliva-permeable pouch being made of the saliva-permeable packaging material. The pouched product for oral use may be a pouched nicotine-containing product for oral use, a pouched tobacco product for oral use and/or a pouched nicotine-free product for oral use.

The web of saliva-permeable packaging material is preferably a tubular web of saliva-permeable packaging material, which is filled with, is being filled with or is to be filled with the filling material, such as the filling material of the pouched product for oral use.

The direction of travel of the web is also known as machine direction, MD. As mentioned above, the translation direction of the first and second cutting edges is angled, preferably perpendicularly angled, to the direction of travel. The perpendicular orientation of the translation direction is also known as cross-machine direction, CMD.

The web has a width direction perpendicular to the direction of travel. In a preferred embodiment, the direction of travel, the translation direction and the width direction are all perpendicular to each other, forming an orthogonal coordinate system. In that case, the plane being perpendicular to the direction of travel, is spanned by the translation direction and the width direction.

The cutting unit is movable between an operative state of the cutting unit, with the cutting unit being in contact with the web, and the non-operative state, with the cutting unit being out of contact with the web. In the operative state, the cutting unit is adapted to cut the web.

The first and second cutting edges have fixed orientations in relation to each other and are movable towards each other and past each other by a linear translatory movement. This differs from scissor blades, which are articulated and are moved towards each other by a pivotal movement around a pivot axis. Hence, the orientation of the scissor blades in relation to each other gradually changes when being moved towards each other.

The first and the second cutting edges of the cutting unit are adapted to be located at opposite sides of the web when the cutting unit is in a non-operative state. Hence, also the first and second parts of the cutting unit are located at opposite sides of the web.

The first and the second cutting edges of the cutting unit are offset to each other, e.g. one of them is located somewhat above the other as seen in the direction of travel, making it possible for the cutting edges to pass each other when performing the cut.

When seen in in the plane being perpendicular to the direction of travel, the first and second cutting edges are non-parallel to each other. Instead, they are angled by the angle α, which may have a size in the range of 0° < α ≤ 30°, preferably 1° ≤ α ≤ 20°, more preferably 3° ≤ α ≤ 15°, most preferably 5° ≤ α ≤ 10°. One of the first and second cutting edges may extend in the width direction of the web and the other may be angled by the angle α. Alternatively, both the first and second cutting edges may be angled in relation to the width direction, such that the sum of their respective angles makes up the angle α.

Due to the non-parallel orientation of the first and second cutting edges, the web is gradually cut across the width, i.e. with a gradually progressing cut, when the first and second cutting edges are moved towards and past each other by the linear translatory movement. It is thereby possible to avoid that fibres of the packaging material are torn off instead of being cut. Hence, by using the cutting unit according to the invention, it is possible to obtain a clean cut, such that a risk of having frayed edges and/or fibres hanging out at the cut can be reduced or preferably avoided.

It has for example been found advantageous to use the cutting unit according to the invention when cutting webs manufactured by the method and arrangement disclosed in the patent application SE 1950206-1 A1 and webs of the packaging material disclosed in the patent application SE 1950207-9 A1.

Another advantage of the cutting unit according to the invention is that it could be made with a low number of movable parts. Purely as an example, there may be only two movable parts, i.e. the first part with the first cutting edge and the second part with the second cutting edge. It is even possible to have only a single moving part, by letting one of the first part or the second part of the cutting unit be stationary and only use the other of the first part or the second part of the cutting unit as a movable part.

The pouched product for oral use described herein typically is portion-packed, i.e. each pouch encloses an amount of filling material, which is intended to make up a portion of a suitable size. The pouched product is configured to fit comfortably and discreetly in a user's buccal cavity, e.g. between the upper and/or lower gum and the lip. It is not intended to be swallowed.

The pouched product for oral use described herein may be dry, semi-dry or moist. Generally, dry pouched products have a moisture content of less than 10 wt% and moist pouched products have a moisture content of above 40 wt%. Semi-dry pouched products have a moisture content between 10 wt% and 40 wt%.

By the term "tobacco" as used herein is meant any part, e.g., leaves, stems, and stalks, of any member of the genus Nicotiana. The tobacco may be whole, shredded, threshed, cut, ground, cured, aged, fermented, or treated otherwise, e.g. granulated or encapsulated.

The term "tobacco material" is used herein for tobacco leaves or parts of leaves, such as lamina and stem. The leaves and parts of leaves may be finely divided (disintegrated), such as ground, cut, shredded or threshed, and the parts of leaves may be blended in defined proportions in the tobacco material.

The filling material may comprise a finely divided tobacco material such as a ground tobacco material or cut tobacco. In addition to the tobacco material, the filling material may further comprise at least one of the following: water, salt (e.g. sodium chloride, potassium chloride, magnesium chloride, and any combinations thereof), pH adjuster, flavouring agent, cooling agent, heating agent, sweetening agent, colorant, humectant (e.g. propylene glycol or glycerol), antioxidant, preservative (e.g. potassium sorbate), binder, disintegration aid. In an example, the filling material comprises or consists of finely divided tobacco material, salt such as sodium chloride, and a pH adjuster.

For pouched products with no or low tobacco content, to which nicotine is added, the nicotine of the filling material may be synthetic nicotine and/or nicotine extract from tobacco plants.

As used herein, the term "moisture content" refers to the total amount of oven volatile ingredients, such as water and other oven volatiles (e.g. propylene glycol) in the preparation, composition or product referred to. The moisture content may be given herein as percent by weight (wt%) of the total weight of the preparation, composition or product referred to. If not stated otherwise, moisture content is herein given in relation to the weight of the filling material.

Pouched products for oral use may or may not be post-moisturized after pouch formation. Pouched products which are not post-moisturized are herein referred to as non-post-moisturized. Post-moisturized pouched products may be produced by spraying water on the pouched product before packaging the pouched products in user containers. Post-moisturized pouches are sometimes referred to as "original" products. Non-post-moisturized pouched products are sometimes referred to as "white" products and are by some consumers considered to have a more appealing visual appearance. The moisture content of the final pouched product comprising a moist or semi-dry snuff or snus product is normally within the range of from 25 to 55 wt% based on the weight of the pouched product.

The saliva-permeable packaging material, which is used for the pouch, typically is a nonwoven material, such as viscose. It may include a chemical binder. Nonwoven materials are fabrics that are neither woven nor knitted. Methods for the manufacturing of nonwoven materials are commonly known in the art.

Pouched products for oral use are normally sized and configured to fit comfortably and discreetly in a user's mouth between the upper or lower gum and the lip. In general, pouched products for oral use have a generally rectangular shape. Some typical shapes (length x width) of commercially available pouched products for oral use are, for instance, 35 mm x 20 mm, 34/35 mm x 14 mm, 33/34 mm x 18 mm, 27/28 mm x 14 mm, 34 mm x 10 mm and 38 x 14 mm. Typical pouched products for oral use may have a maximum length within the range of from 25 to 40 mm along the longitudinal direction of the product and a maximum width within the range of from 5 to 20 mm along the transverse direction of the product. The thickness ("height") of the pouched product is normally within the range of from 2 to 8 mm. The total weight of commercially available pouched products for oral use are typically within the range from about 0.3 to about 3.5 g, such as from about 0.5 to 1.7 g, per pouched product.

A user container typically contains in the range of 10-30 pouched products, such as in the range of 20-25 pouched products. The pouched products may be placed randomly in the user container or in a pattern, for instance as described in WO 2012/069505 A1. The user container is a consumer package having a shape and a size adapted for conveniently carrying the consumer package in a pocket or in a handbag and it may be used for packaging any known type of pouched product for oral use.

The term "tubular web" as used herein refers to any cross-sectional shape; specifically, it is not restricted to a circular tubular web. The tubular web may e.g. have a square, polygonal, elliptical or oval cross-sectional shape. However, the tubular web has a closed circumference, such that the tubular web is able to retain the filling material inside the tubular web.

The first cutting edge may be formed by an edge of a blade comprised in the first part of the cutting unit. The second cutting edge may be formed by an edge of a blade comprised in the second part of the cutting unit. Such a blade can be replaced when worn out.

A surface of the blade may have an angle β in relation to the direction of travel, wherein 90° ≤ β ≤ 100°, preferably 90.5° ≤ β ≤ 95°, more preferably 91° ≤ β ≤ 93°. Hence, the blade may be not exactly perpendicular to the direction of travel of the tubular web, but instead slightly inclined. Preferably, the angle β is adjustable. The adjustment of the angle β may be used to ascertain that the first and second cutting edges remain in contact during the linear translatory movement towards and past each other.

The cutting unit may further comprise a biasing means adapted to bias one of the first or second cutting edges towards the other of the first or second cutting edges in the direction of travel. The biasing means may be used to adjust the force applied between the first and second cutting edges.

The first part of the cutting unit may comprise a first clamping surface, located at or adjacent to the first cutting edge, and the second part of the cutting unit may comprise a second clamping surface, located at or adjacent to the second cutting edge, the second clamping surface facing the first clamping surface as seen in the translation direction, the first and second clamping surfaces being adapted to clamp the web therebetween. Hence, the first and second clamping surfaces are located at opposite sides of the web, when the web is advanced in the direction of travel through the cutting unit.

The first and second clamping surfaces are used to hold the web while performing at least part of the cut, thereby helping to hold the web in a stretched state. At least during part of a cutting step, e.g. at least during the final part of the cutting step, the first and second clamping surfaces may hold the web in a fixed position in relation to the linearly translatory moving first and/or second cutting edges.

Typically, there is a first interspace x₁ between the first cutting edge and the part of the first clamping surface being closest to the first cutting edge. The first interspace x₁ may have a size 0<x₁<5.0 mm, preferably 0.2<x₁<4.0 mm, more preferably 0.4<x₁<3.0 mm, most preferably 0.6<x₁<2.0 mm. There is also typically a corresponding second interspace x₂ between the second cutting edge and the part of the second clamping surface being closest to the second cutting edge. The second interspace x₂ may have a size 0<x₂<5.0 mm, preferably 0.2<x₂<4.0 mm, more preferably 0.4<x₂<3.0 mm, most preferably 0.6<x₂<2.0 mm. Typically, the first interspace x₁ and the second interspace x₂ are of the same size.

The first part of the cutting unit may in addition to the first clamping surface also comprise a third clamping surface, located at or adjacent to the first cutting edge, and the second part of the cutting unit may comprise a fourth clamping surface, located at or adjacent to the second cutting edge, the fourth clamping surface facing the third clamping surface as seen in the translation direction, the third and fourth clamping surfaces being adapted to clamp the web therebetween. Hence, the third and fourth clamping surfaces are located at opposite sides of the web, when the web is advanced in the direction of travel through the cutting unit.

If the cutting unit has four clamping surfaces, the first and second clamping surfaces are preferably located before, i.e. upstream of as seen on the direction of travel, the first and second cutting edges, and the third and fourth clamping surfaces are located after the first and second cutting edges, i.e. downstream of as seen along the direction of travel.

Typically, there is an interspace x₃ between the first cutting edge and the part of the third clamping surface being closest to the first cutting edge, e.g. 0<x₃<5.0 mm, preferably 0.2<x₃<4.0 mm, more preferably 0.4<x₃<3.0 mm, most preferably 0.6<x₃<2.0 mm. There is also typically a corresponding interspace x₄ between the second cutting edge and the part of the fourth clamping surface being closest to the second cutting edge, e.g. 0<x₄<5.0 mm, preferably 0.2<x₄<4.0 mm, more preferably 0.4<x₄<3.0 mm, most preferably 0.6<x₄<2.0 mm. Typically, the third interspace x₃ and the fourth interspace x₄ are of the same size. Preferably, the first, second, third and fourth interspaces, x₁, x₂, x₃, x₄ are all of the same size.

Even if it could be enough to hold the web in a stretched state with a single pair of clamping surfaces, it is often preferable to use a pair of clamping surfaces, like the first and second clamping surfaces, located upstream of the first and second cutting edges and another pair of clamping surfaces, like the third and fourth clamping surfaces, located downstream of the first and second cutting edges.

At least one of the first and second clamping surfaces and/or at least one of the third and fourth clamping surfaces may be adapted for providing a transverse seal to the web. The transverse seal extends in the width direction of the web. As mentioned above, the width direction may be perpendicular to both the direction of travel and to the translation direction. The transverse seal may be made by any method known to the skilled person, e.g. by means of heat-welding and/or ultrasonic welding.

Hence, the first and second clamping surfaces, as well as the optional third and fourth clamping surfaces, may be parts of a respective jaw used for heat-welding. At least one of the first part or the second part of the cutting unit, or a portion thereof, may be heated and thus adapted for providing a heat-welded transverse seal.

Alternatively, the first and second clamping surfaces and/or the optional third and fourth clamping surfaces may form an ultrasonic welding unit. For example, one of the first and second clamping surfaces may form an ultrasonic horn and the other may form an anvil of an ultrasonic welding unit. Likewise, the optional third and fourth clamping surfaces may form an ultrasonic horn and anvil, respectively.

As mentioned above, the first and second clamping surfaces, as well as the optional third and fourth clamping surfaces, may be adapted to hold the web in a fixed position in relation to the linearly translatory moving first and/or second cutting edges least during part of a cutting step. In an embodiment, the web is clamped during the final part of the cutting step. In that case, the cutting is partly performed before the transversely sealing starts and partly in parallel with the transverse sealing. In another embodiment, the web is clamped during the whole cutting step. In that case, the transverse sealing may be ready when the cutting starts.

The cutting unit may further comprise a translation guide extending in the translation direction, wherein at least one of the first and second cutting edges is linear translatory movable towards and past the other of the first and second cutting edges by a movement guided by the translation guide. Preferably, the translation guide is comprised in one of the first and second parts of the cutting unit. As an example, the translation guide may form an integral unit with a component also comprising the first cutting edge, such as a first component of the first part of the cutting unit, or with a component also comprising the second cutting edge, such as a first component of the second part of the cutting unit. Alternatively, the translation guide may be a separate component comprised in either of the first part or the second part of the cutting unit.

The first and third clamping surfaces may be comprised in a second component of the first part and/or the second and fourth clamping surfaces may be comprised in a second component of the second part, preferably at least one of the second components being biased in the translation direction towards the other of the second components, e.g. by means of a second-component spring. The cut may then be performed while the biased second component is being pushed away in the translation direction. A main portion of the welding, or the whole welding, may then be then performed when that second component has reached its end position, i.e. when it is pushed away as much as possible as seen in the translation direction, especially in case of ultrasonic welding.

As an alternative or a complement, at least one of the first, second, third or fourth clamping surfaces may be formed as a separate unit being biased in the translation direction, e.g. by means of a clamping-surface spring.

The present invention further relates to an apparatus for manufacturing a pouched product for oral use. The apparatus comprises
- a first supplying unit for supplying a tubular web of a saliva-permeable packaging material,
- a second supplying unit for supplying a filling material,
- a transverse sealing unit for providing the tubular web with a transverse seal, thereby forming a pouched product, and
- a separation unit for separating the pouched product from a subsequent pouched product at or adjacent to the transverse seal,
wherein the separation unit comprises, is constituted by or forms part of the cutting unit as described herein.

The web may be supplied as a planar web, which is formed to a tubular web in the apparatus, e.g. with any of the methods described in prior art documents US 4,703,765, US 6,135,120 and EP 3383746 B1 mentioned above. Alternatively, the web may be supplied as a pre-formed tubular web.

The pouched product and the filling material are described above.

The separation unit and the transverse sealing unit may together comprise, be constituted by or form part of the cutting unit, as described herein, e.g. by the embodiments described herein, in which clamping surfaces are also used for sealing. By combining the separation unit and the transverse sealing unit, a unit performing both of these operations may be made with a low number of movable parts. Purely as an example, there may be only two movable parts, i.e. one part with the first cutting edge and part of the transverse sealing unit and one part with the second cutting edge and part of the transverse sealing unit. It is even possible to have only a single moving part, by letting one part be stationary and only use the other as a movable part.

The cutting unit may be configured to travel together with the web for a predeterminable distance, e.g. the distance being passed while performing the cut. The cutting unit then travels with the same speed as the web. When the cut is ready, and the optional transverse sealing is ready, the first and second part of the cutting unit are moved away from the web by a reverse linear translatory movement, and the cutting unit is moved back in an upstream direction.

As a result of the transverse sealing and the cutting in the apparatus, each pouched product for oral use is delimited, as seen along the direction of travel, by a pair of opposite transverse seals. If the direction of travel of the tubular web is vertical, there will thus be a lower transverse seal and an upper transverse seal, when the transverse seals are formed during manufacturing of the pouched product.

The present invention further relates to a method for cutting a web of a saliva-permeable packaging material, the web being adapted to be advanced in a direction of travel. The method comprises moving at least one of a first cutting edge and a second cutting edge by a linear translatory movement towards and past the other of the first and second cutting edges in a translation direction being angled, preferably perpendicularly angled, to the direction of travel, thereby providing a gradually progressing cut between the first and second cutting edges. The first and second cutting edges are arranged offset to each other and on opposite sides of the web when the cutting unit comprising the first and second cutting edges is in a non-operative state, the first and second cutting edges being angled by an angle α relative to each other as seen in a plane being perpendicular to the direction of travel.

The method for cutting a web of a saliva-permeable packaging material is suitably performed by the cutting unit described herein. The technical effects and advantages described herein for the cutting unit are thus applicable for the method as well. The web may move continuously or intermittently when performing the method.

The present invention further relates to a method for manufacturing a pouched product for oral use, the method comprising:
a) providing a tubular web of a saliva-permeable packaging material,
b) providing the tubular web with a first transverse seal,
c) supplying a portion of a filling material through the tubular web,
d) advancing the tubular web in a direction of travel,
e) providing the tubular web with a second transverse seal thereby forming a pouched product,
f) separating the pouched product from a subsequent pouched product by means of the method for cutting a web of a saliva-permeable packaging material described herein.

The method for manufacturing a pouched product for oral use is suitably performed by the apparatus for manufacturing a pouched product for oral use described herein. The technical effects and advantages described herein for the apparatus are thus applicable for the method as well. The tubular web may move continuously or intermittently when performing the method.

Step e) of providing the second transverse seal for the pouched product may be performed in the same operation step as step b) of providing the first transverse seal for the subsequent product, e.g. by using the first, second, third and fourth clamping surfaces described herein for providing a the first and second transverse seals.

Step f) may be performed by separating the pouched product from the subsequent pouched product in an interspace between the second transverse seal for the pouched product and the first transverse seal for the subsequent product.

Step f) may be performed at least partly in the same operation step as steps b) and e). This may e.g. be done by making at least the final part of the cut with the web clamped by the first, second, third and fourth clamping surfaces described herein. In that case, it is preferable that the first cutting edge and the clamping surface/s comprised in the first part of the cutting unit, i.e. the first clamping surface, and optionally the third clamping surface, are moved together. Correspondingly, it is preferable that the second cutting edge and the clamping surface/s comprised in the second part of the cutting unit, i.e. the second clamping surface, and optionally the fourth clamping surface, are moved together. This makes it possible to use a low number of movable parts in the cutting unit according to the invention, which may combine the transverse sealing unit and the separation unit.

Alternatively, step f) may be performed when step e) is finished. In that case, it is preferable that the first cutting edge and the clamping surface/s comprised in the first part of the cutting unit, i.e. the first clamping surface, and the optional third clamping surface, are movable independently of each other, at least in the translation direction. Correspondingly, it is preferable that the second cutting edge and the clamping surface/s comprised in the second part of the cutting unit, i.e. the second clamping surface, and optionally the fourth clamping surface, are movable independently of each other, at least in the translation direction. This makes it possible to perform the step of transverse sealing independently of the step of separation. Thereby, the transverse seal may be provided when the cut starts, which may reduce the risk the filling material leaking out through a seal not ready yet.

### BRIEF DESCRIPTION OF THE DRAWINGS

The present invention will hereinafter be further explained by means of non-limiting examples with reference to the appended drawings wherein:
- Fig. 1: illustrates a pouched product for oral use according to prior art,
- Fig. 2: illustrates a pouched product for oral use made in an apparatus or made with a method according to the invention,
- Fig. 3: illustrates an apparatus for manufacturing a pouched product for oral use according to the invention,
- Fig. 4: illustrates a cutting unit according to the invention in a non-operative state seen in a perspective view,
- Fig. 5: illustrates the cutting unit of Fig. 4 in a top view,
- Fig. 6: illustrates the cutting unit of Fig. 4 in a cross-sectional side view,
- Fig. 7: illustrates the cutting unit of Fig. 4 in an operative state seen in a top view,
- Fig. 8: illustrates the cutting unit of Fig. 7 in a cross-sectional side view,
- Fig. 9: illustrates a detail of a first part of the cutting unit,
- Fig. 10: illustrates a detail of a second part of the cutting unit,
- Fig. 11: illustrates an alternative cutting unit according to the invention in a non-operative state seen in a side view,
- Fig. 12: illustrates the alternative cutting unit of Fig. 11 in a top view, and
- Fig. 13: illustrates a method according to the invention for manufacturing a pouched product for oral use.

It should be noted that the appended drawings are not necessarily drawn to scale and that the dimensions of some features of the present invention may have been exaggerated for the sake of clarity.

### DETAILED DESCRIPTION

The invention will in the following be exemplified by embodiments. It should however be realized that the embodiments are included in order to explain principles of the invention and not to limit the scope of the invention, defined by the appended claims. Details from two or more of the embodiments may be combined with each other.

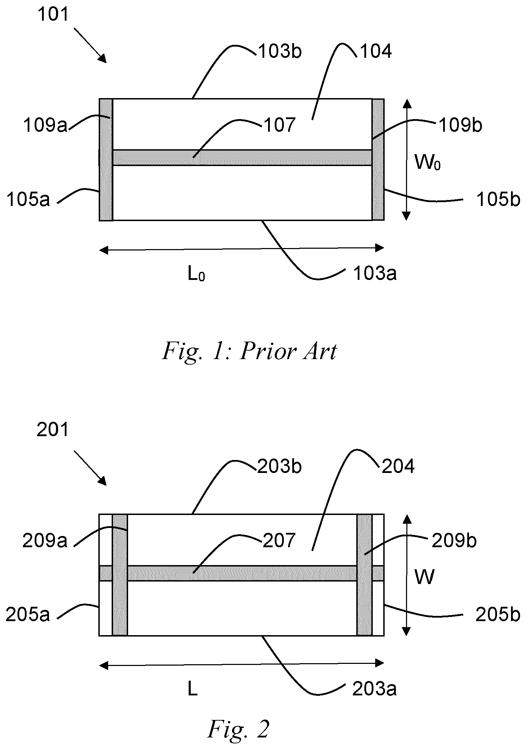

Figure 1 schematically illustrates a pouched product for oral use 101 according to prior art. The prior art product 101 has a rectangular shape with a maximum length L₀ extending in a length direction and a maximum width W₀ extending in a width direction, whereby the maximum length L₀ is greater than the maximum width W₀. The prior art product 101 comprises a filling material and a saliva-permeable pouch 104, made of a saliva-permeable packaging material, enclosing the filling material. The prior art product 101 comprises two long side edges 103a, 103b and two short side edges 105a, 105b. The prior art product 101 also has an extension in a height direction, being perpendicular to the length direction and to the width direction, however not seen in the illustrated perspective.

The prior art product 101 comprises at least one seal 107 extending in the length direction. Typically, and as illustrated in Figure 1, there is a single seal extending in the length direction. This seal is often called a longitudinal seal, since, when manufacturing the prior art product 101, this seal is made along the direction of travel of the web of packaging material forming the pouch 104. The longitudinal seal 107 is often positioned spaced apart from the long side edges 103a, 103b. Thereby it is often preferred to position it at or close to the longitudinal centre-line, as is illustrated in Figure 1. The longitudinal seal 107 may be made by any method known to the skilled person, e.g. by means of heat-welding and/or ultrasonic welding. In a commonly used method, the longitudinal seal 107 is formed as a fin seal, which is folded down upon the packaging material, such that the pouch 104 locally comprises three plies of packaging material on top of the filling material.

Further, the prior art product 101 comprises two seals 109a, 109b extending in the width direction. The two seals 109a, 109b seal the two short side edges 105a, 105b. These seals are often called transverse seals, since, when manufacturing the prior art product 101, these seals are made transverse to the direction of travel, i.e. in the cross-machine direction. In the transverse seals, the packaging material forming the saliva-permeable pouch is double. The transverse seals 109a, 109b may be made by any method known to the skilled person, e.g. by means of heat-welding and/or ultrasonic welding. Since the transverse seals 109a, 109b typically are made after the longitudinal seal 107, i.e. downstream in the manufacturing apparatus, the longitudinal seal 107 is included in the transverse seals 109a, 109b, i.e. the longitudinal seal 107 forms part of the transverse seals 109a, 109b. The longitudinal seal 107 may e.g. be welded into the transverse seals 109a, 109b. Hence, at those locations, the packaging material forming the saliva-permeable pouch 104 occurs four plies on top of each other.

The transverse seal 109a, 109b may be coterminous with the respective short side edge 105a, 105b, as is illustrated. This may e.g. be the case when the transverse sealing and separation is performed as a single common operation in a single unit, e.g. by a sealing device utilizing ultrasonic welding as disclosed in EP 3383746 B1. As an alternative, there may also be an interspace between the transverse seal and the respective short side edge 105a, 105b, such that there is unsealed packaging material between the transverse seal 109a, 109b and the short side edge 105a, 105b.

Figure 2 schematically illustrates a pouched product for oral use 201 made in an apparatus or made with a method according to the invention for manufacturing a pouched product for oral use. The pouched product 201 comprises a filling material and a saliva-permeable pouch 204 enclosing the filling material. It has a rectangular shape with a maximum length L extending in a length direction and a maximum width W extending in a width direction, whereby the maximum length L is greater than or equal to the maximum width W. The pouched product 201 has an extension in a height direction, however not seen in the perspective of Figure 2. There is a longitudinal seal 207, corresponding to the longitudinal seal 107 of the prior art product 101 described above.

The pouched product 201 comprises two long side edges 203a, 203b and two short side edges 205a, 205b. Similar to the prior art product 101, the pouched product 201 has two transverse seals 209a, 209b sealing a respective first edge portion and a second edge portion along the two short side edges 205a, 205b of the pouched product 201. The transverse seals 209a, 209b do not extend all the way out to the respective short side edge 205a, 205b, but there is instead an interspace between the transverse seal 209a, 209b and the respective short side edge 205a, 205b, such that there is unsealed packaging material between the transverse seal 209a, 209b and the short side edge 205a, 205b. The transverse seals 209a, 209b may be made by any method known to the skilled person, e.g. by means of heat-welding, and/or ultrasonic welding.

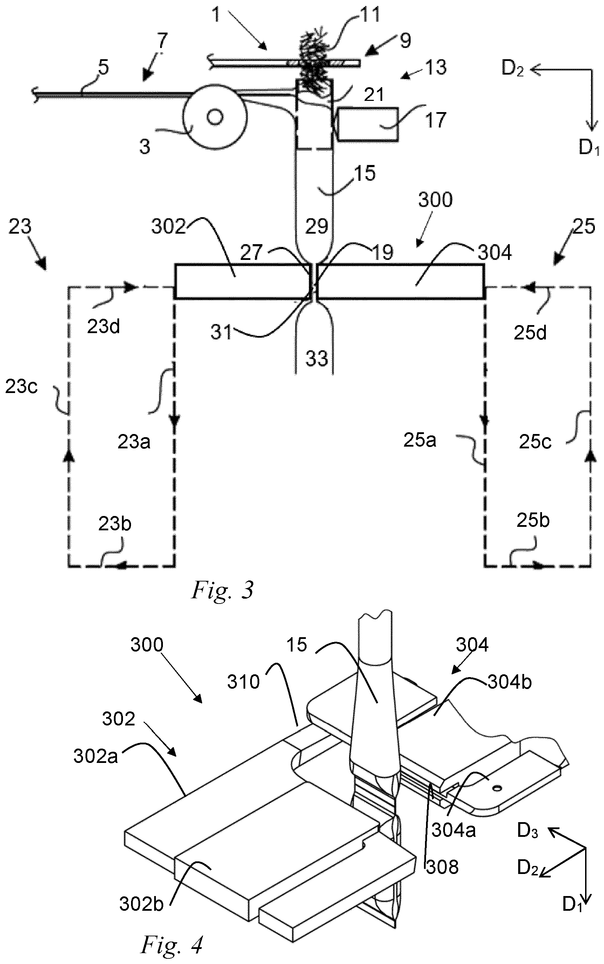

Figure 3 schematically illustrates an apparatus 1 for manufacturing a pouched product for oral use according to a first embodiment of the invention. The features of the manufactured pouched product are explained above in conjunction with Figure 2.

The apparatus 1 comprises a web supplying unit 3 for supplying a planar web 5 of a packaging material 7, a second supplying unit 9 for supplying a filling material 11 to the advancing web 5, a forming unit 13 for forming a tubular web 15 of the planar web 5 of the packaging material 7 and a longitudinal sealing unit 17. The web supplying unit 3 and the forming unit 13 thus together form a first supplying unit for supplying the tubular web 15.

The tubular web 15 moves in a direction of travel D₁. A longitudinal seal, such as the longitudinal seal 207 illustrated in Figure 2, is continuously formed in the advancing tubular web 15 by the longitudinal sealing unit 17. The longitudinal sealing unit 17 is a sealing unit according to known technology and may e.g. utilize heat-welding and/or ultrasonic welding.

The apparatus 1 further comprises a transverse sealing unit for making a transverse seal and a separation unit for separating the pouched products from each other. In the illustrated embodiment, the transverse sealing unit and the separation unit are combined into a common unit, referred to as a cutting unit 300, schematically indicated in Figure 3. The cutting unit 300 comprises a first part 302 and a second part 304 being located at opposite sides of the tubular web 15 with a gap 19 therebetween. The cutting unit 300 is further described below in conjunction with Figures 4-10.

The second supplying unit 9 supplying the filling material 11 may be located downstream or upstream of the forming unit 13 or together with the forming unit 13. If located together, as for the apparatus 1 illustrated in Figure 3, the planar web 5 is first formed to a tubular web 15 and thereafter the filling material 11 is placed in the tubular web 15 as a portion of filling material e.g. by means of the dosing method described in EP 2 428 450 B1. In the illustrated embodiment, a fill tube 21 is used both for forming the tubular web 15 and for filling of the portion of filling material 11 into the tubular web 15.

Alternatively, a portion of filling material may be placed on the planar web before the planar web is formed to a tubular web, such that the packaging material is arranged around the portion of filling material to form the tubular web, thereby enclosing the portion. This would for e.g. be the case for an apparatus like the one disclosed in US 6,135,120.

The cutting unit 300 according to the invention may be retrofitted in existing apparatuses for manufacturing pouched products for oral use, where it would be used to separate a pouched product from a subsequent pouched product and, optionally, also for providing transverse seals.

The movements of the first part 302 and the second part 304 of the cutting unit 300 are schematically illustrated in Figure 3 as rectangular movement cycles 23, 25. The first part 302 and the second part 304 of the cutting unit 300 are arranged to be displaceable in a reciprocating way in relation to the tubular web 15 in a translation direction D₂ being perpendicular to the direction of travel D₁, between an operative state of the cutting unit 300, schematically illustrated in Figure 3, with the cutting unit 300 being in contact with the tubular web 15, and a non-operative state, being out of contact with the tubular web 15. In addition, the first part 302 and the second part 304 are adapted to follow the tubular web 15 when moving in the direction of travel D₁, while performing the cutting and the transverse sealing.

The first part 302 moves along a movement cycle 23, which has a first portion 23a substantially parallel to and adjacent to the tubular web 15 with the first part 302 in contact with the tubular web 15, a second portion 23b moving the first part 302 away from the tubular web 15 to the non-operative state of the cutting unit 300, a third portion 23c bringing the first part 302 back upstream while out of contact with the tubular web 15 and a fourth portion 23d bringing the first part 302 back into contact with the tubular web 15, i.e. back to the operative state of the cutting unit 300. The second part 304 follows a corresponding movement cycle 25, having corresponding portions 25a, 25b, 25c, 25d.

Below a cycle for producing a pouched product is described. During this cycle, the first part 302 and the second part 304 of the cutting unit 300 follow their respective movement cycle 23, 25.

A portion of the filling material 11 is filled into the tubular web 15. The portion of the filling material 11 moves downwards through the fill tube 21, e.g. by gravity and/or being pushed by pressurized gas, until it reaches the tubular web 15, which is in the gap 19 between the first part 302 and the second part 304 with the cutting unit 300 being in the operative state.

The first part 302 and the second part 304 move downstream together with, and with the same speed as, the tubular web 15 along the respective first portions 23a, 25a of their movement cycles, while the tubular web 15 tubular is separated by being cut by the cutting unit 300. The first portions 23a, 25a of the movement cycles is also used to perform transverse sealing by means of welding. Thereby a first transverse seal 27, in this case a lower transverse seal, is formed in the pouch 29 at the same time as a second transverse seal 31, in this case an upper transverse seal, is formed in the preceding pouch 33. These transverse seals 27, 31 correspond to the transverse seals 209a, 209b depicted in Figure 2. Hence, the welding of the transverse seals 27, 31 is performed at least partly in parallel with the separation by cutting, at least during the final part of the cutting step. As is described herein, both of these operations may be performed by the cutting unit 300 according to the invention.

Thereafter the first part 302 and the second part 304 of the cutting unit 300 are moved away from the tubular web 15 along the second portions 23b, 25b of their respective movement cycle until the cutting unit 300 reaches the non-operative state. The already formed first transverse seal 27 prevents the portion of the filling material 11 from falling out of the pouch 29 being formed.

As a next step, the a first part 302 and the second part 304 of the cutting unit 300 are moved back upstream along the third portions 23c, 25c of their respective movement cycle out of contact with the tubular web 15, i.e. with the cutting unit 300 still in the non-operative state.

Then the first part 302 and the second part 304 are moved back to the operative state of the cutting unit 300 along the fourth portions 23d, 25d of their respective movement cycle, such that the cutting unit 300 can start cutting again, i.e. beginning a new cycle.

The transverse seals 27, 31 typically have a length corresponding to a collapsed cross-sectional shape of the tubular web 15. The length of the transverse seal 27, 31 is determined in a width direction D₃, which is perpendicular to both the direction of travel D₁ and to the translation direction D₂. When being transversely sealed, the tubular web 15 is pressed down to a straight line of doubled packaging material giving the collapsed cross-sectional shape. Hence, the length of the transverse seal 27, 31 equals, or substantially equals, half of the circumference of the tubular web 15. This corresponds to the maximum width W of the pouched product 201, see Figure 2.

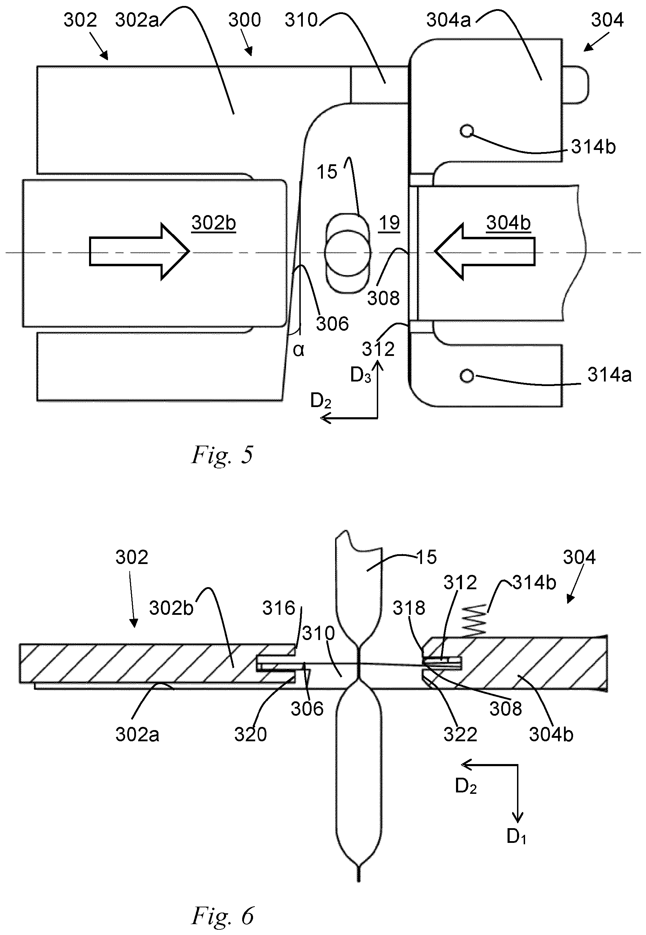

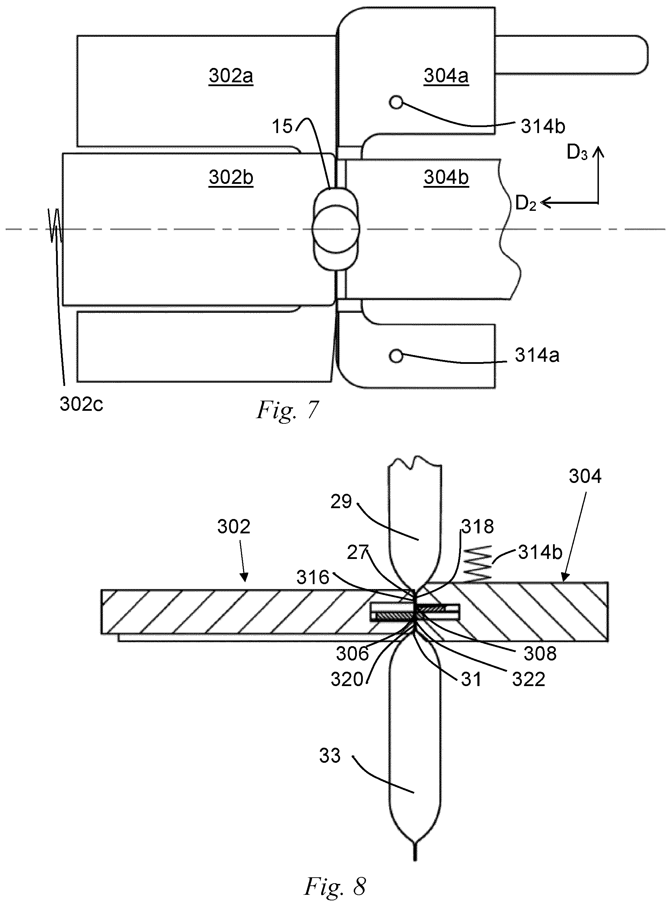

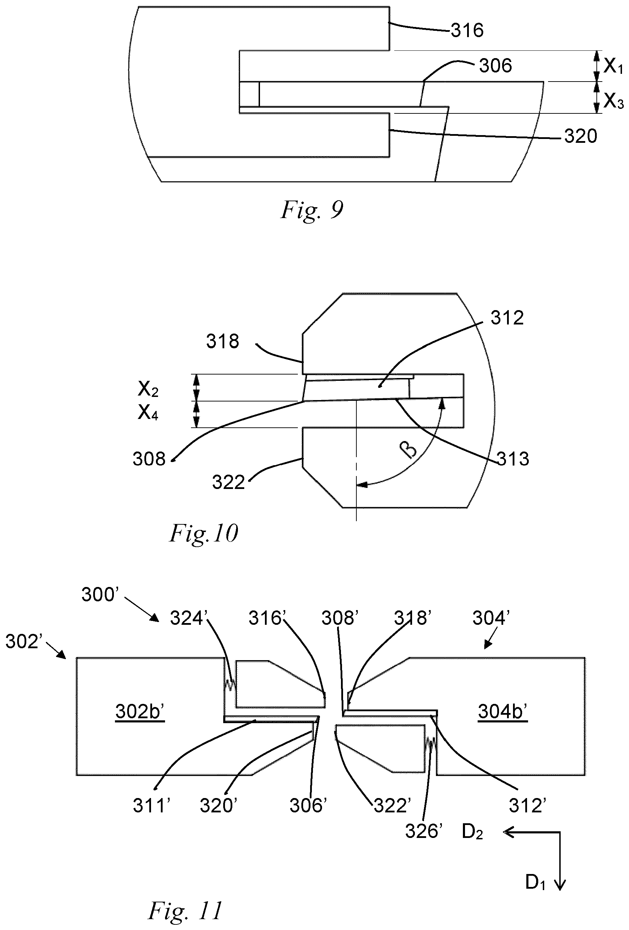

Figures 4-10 illustrate the cutting unit 300. Figures 4-6 show the cutting unit 300 in the non-operative state, i.e. out of contact with the web tubular web 15. Figures 7-8 illustrate the cutting unit 300 in its operative state having reached a final state of the cutting the web tubular web 15. Figure 4 shows a perspective view, while Figures 5 and 7 show top views and Figures 6 and 8 show cross-sectional views made along the dashed lines in Figures 5 and 7. Figure 9 illustrates a detail of the first part 302 of the cutting unit 300 and Figure 10 illustrates a detail of the second part 304 of the cutting unit 300.

As mentioned in conjunction with Figure 3, the cutting unit 300 comprises the first part 302 and the second part 304 located on opposite sides of the web tubular web 15 when the cutting unit 300 is in a non-operative state. The first part 302 comprises a first cutting edge 306 and the second part 304 comprises a second cutting edge 308. The first cutting edge 306 and the second cutting edge 308 are angled in relative to each other by an angle α as seen in a plane being perpendicular to the direction of travel D₁, as best seen in the top view of Figure 5. Hence, the first and second cutting edges 306, 308 have non-parallel orientations. The angle α has a size in the range of 0° < α ≤ 30°, preferably 1° ≤ α ≤ 20°, more preferably 3° ≤ α ≤ 15°, most preferably 5° ≤ α ≤ 10°. Due to the non-parallel orientation of the first and second cutting edges 306, 308, the tubular web 15 is gradually cut across the width, i.e. along the width direction D₃, with a gradually progressing cut. It is thereby possible to avoid that fibres of the packaging material are torn off instead of being cut. Hence, it is possible to obtain a clean cut, such that a risk of frayed short side edges 205a, 205b of the pouch 204 and/or fibres hanging out can be reduced or preferably avoided, cf. Figure 2.

In the illustrated embodiment, the second cutting edge 308 extends in the width direction D₃, while the first cutting edge 306 is angled by the angle α in relation to the width direction D₃, i.e. in the plane being perpendicular to the direction of travel D₁, see Figure 5. Alternatively, only the second cutting edge 308 may be angled by the angle α in relation to the width direction D₃. Yet alternatively, both the first and second cutting edges 306, 308 may be angled in relation to the width direction D₃, such that the sum of their respective angles makes up the angle α.

When the tubular web 15 is to be cut, the first and second cutting edges 306, 308 are moved towards each other in a linear translatory movement in the translation direction D₂ and in a direction opposite to the translation direction D₂, respectively, see arrows indicated in Figure 5, such that the gap 19 between them is narrowed until the cutting unit 300 reaches the operative state, in which the first and second cutting edges 306, 308 start cutting, by the first and second cutting edges 306, 308 gradually passing each other. In the illustrated embodiment, the translation direction D₂ is perpendicular to the direction of travel D₁ of the tubular web 15 and to the width direction D₃, which is preferred but not a must. One or both of the first and second cutting edges 306, 308 may be linearly translatory movable, in the illustrated embodiment shown as both.

The second cutting edge 308 is formed by an edge of a blade 312 comprised in the second part 304 of the cutting unit 300. A surface 313 of the blade 312 has an angle β in relation to the direction of travel D₁ of the tubular web 15, wherein 90° ≤ β ≤ 100°, preferably 90.5° ≤ β ≤ 95°, more preferably 91° ≤ β ≤ 93°, see detail in Figure 10. Hence, in the shown embodiment, the blade 312 is not exactly perpendicular to the direction of travel D₁ of the tubular web 15, but instead slightly inclined. Preferably, the angle β is adjustable.

Further, preferably, the first and second cutting edges 306, 308 are biased towards each other. In the illustrated embodiment, a biasing means, schematically illustrated as a pair of springs 314a, 314b, pushes the blade 312 in the direction of travel D₁ and thereby pushes the second cutting edge 308 towards the first cutting edge 306 in the direction of travel D₁.

As is most easily seen in the cross-sectional views of Figures 6 and 8, the first part 302 of the cutting unit 300 comprises a first clamping surface 316 and the second part 304 comprises a second clamping surface 318. The second clamping surface 318 faces the first clamping surface 316 as seen in the translation direction D₂, such that the first and second clamping surfaces 316, 318 are adapted to clamp the tubular web 15 therebetween, when the cutting unit 300 is in its operative state, see Figure 8. The first and second clamping surfaces 316, 318 are located before, i.e. upstream of, the first and second cutting edges 306, 308.

There are also provided corresponding clamping surfaces 320, 322 after, i.e. downstream of, the first and second cutting edges 306, 308. The first part 302 of the cutting unit 300 comprises a third clamping surface 320 and the second part 304 comprises a fourth clamping surface 322. The fourth clamping surface 322 faces the third clamping surface 320 as seen in the translation direction D₂.

The clamping surfaces 316, 318, 320, 322 are used to hold the tubular web 15 while performing the cut, thereby helping to hold the tubular web 15 in a stretched state. During the final part of the cutting step, the clamping surfaces 316, 318, 320, 322 are able to hold the tubular web 15 in a fixed position in relation to the moving first and second cutting edges 306, 308, as illustrated in Figures 7 and 8.

As mentioned above, the illustrated cutting unit 300 combines cutting and welding. Hence, the first, second, third and fourth clamping surfaces 316, 318, 320, 322 are also used to provide a transverse seal to the tubular web 15. Thereby a first transverse seal 27, in this case a lower transverse seal, is formed in the pouch 29 by the first and second clamping surfaces 316, 318 at the same time as a second transverse seal 31, in this case an upper transverse seal, is formed in the preceding pouch 33 by the third and fourth clamping surfaces 320, 322. The transverse seals 27, 31 may be made by any method known to the skilled person, e.g. by means of heat-welding and/or ultrasonic welding. Accordingly, in the illustrated embodiment, the cutting unit 300 performs the functions of a combined transverse sealing unit and a separation unit. Hence, the first, second, third and fourth clamping surfaces 316, 318, 320, 322 may be parts of a respective jaw used for heat-welding. Alternatively, the first and third clamping surfaces 316, 320 may form an ultrasonic horn and the second and fourth clamping surfaces 318, 322 may form an anvil of an ultrasonic welding unit.

The first and second cutting edges 306, 308 operate in the interspace between the first and second clamping surfaces 316, 318 and the third and fourth clamping surfaces 320, 322. There is a first interspace x₁ between the first cutting edge 306 and the part of the first clamping surface 316 being closest to the first cutting edge 306, see detailed view in Figure 9. The first interspace x₁ may have a size 0<x₁<5.0 mm, preferably 0.2<x₁<4.0 mm, more preferably 0.4<x₁<3.0 mm, most preferably 0.6<x₁<2.0 mm. There is a corresponding second interspace x₂ between the second cutting edge 308 and the part of the second clamping surface 318 being closest to the second cutting edge 308, see detailed view in Figure 10. Typically, the first interspace x₁ and the second interspace x₂ are of the same size. The second interspace x₂ may have a size 0<x₂<5.0 mm, preferably 0.2<x₂<4.0 mm, more preferably 0.4<x₂<3.0 mm, most preferably 0.6<x₂<2.0 mm.

There is further a third interspace x₃ between the first cutting edge 306 and the part of the third clamping surface 320 being closest to the first cutting edge 306, see detailed view in Figure 9. The third interspace x₃ may have a size 0<x₃<5.0 mm, preferably 0.2<x₃<4.0 mm, more preferably 0.4<x₃<3.0 mm, most preferably 0.6<x₃<2.0 mm. There is a corresponding fourth interspace x₄ between the second cutting edge 308 and the part of the fourth clamping surface 322 being closest to the second cutting edge 308, see detailed view in Figure 10. The fourth interspace x₄ may have a size 0<x₄<5.0 mm, preferably 0.2<x₄<4.0 mm, more preferably 0.4<x₄<3.0 mm, most preferably 0.6<x₄<2.0 mm. Typically, the third interspace x₃ and the fourth interspace x₄ are of the same size. Preferably, the first, second, third and fourth interspaces, x₁, x₂, x₃, x₄ are all of the same size.

The interspaces x₁, x₂, x₃, x₄ result in that the transverse seal 209a, 209b does not extend all the way out to the short side edges 205a, 205 of the pouched product 201, as can be spotted in Figures 2 and 8.

The first part 302 of the cutting unit 300 comprises a first component 302a comprising the first cutting edge 306. The first component 302a is used for separation of the pouches 29, 33 being manufactured. The first part 302 of the cutting unit 300 further comprises a second component 302b comprising the first and the third clamping surfaces 316, 320, which are used to clamp the tubular web 15 and, as an option shown in the illustrated embodiment, to provide the tubular web 15 with transverse seals 27, 31.

The second part 304 of the cutting unit 300 comprises the corresponding first component 304a having the blade 312 with the second cutting edge 308. The first component 304a of the second part is biased by the biasing means 314a, 314b pushing the blade 312 in the direction of travel D₁. Correspondingly to as for the first part 302, the first component 304a of second part 304 is used for separation of the pouches 29, 33 being manufactured. The second part 304 of the cutting unit 300 further comprises a second component 304b comprising the second and the fourth clamping surfaces 318, 322, which are used to clamp the tubular web 15 and, as an option shown in the illustrated embodiment, to provide the tubular web 15 with the transverse seals 27, 31.

At least one of the second component 302b of the first part 302 or the second component 304b of the second part 304 of the cutting unit 300 may be biased in the translation direction D₂ towards the other of the two second components 302b, 304b, e.g. by means of a second-component spring 302c. Figure 7 exemplary illustrates that the second component 302b of the first part 302 optionally is biased by the second-component spring 302c in the translation direction D₂. The cut may then be performed while the biased second component 302b is being pushed away in the translation direction D₂, i.e. in a direction against the biasing force. A main portion of the welding, or the whole welding, may then be then performed when that second component 302b has reached its end position, i.e. when it is pushed away as much as possible as seen in the translation direction D₂, especially in case of ultrasonic welding

A translation guide 310 is provided in the cutting unit 300 to control the linear translatory movements. In the illustrated embodiment, the translation guide 310 forms an integral unit with the first component 302a of the first part 302, which first component 302a comprises the first cutting edge 306, best seen in Figure 5. Alternatively, the translation guide may form an integral unit with the first component 304a of the second part 304 comprising the second cutting edge 308. The translation guide may also be a separate component comprised in either of the first part 302 or the second part 304 of the cutting unit 300.

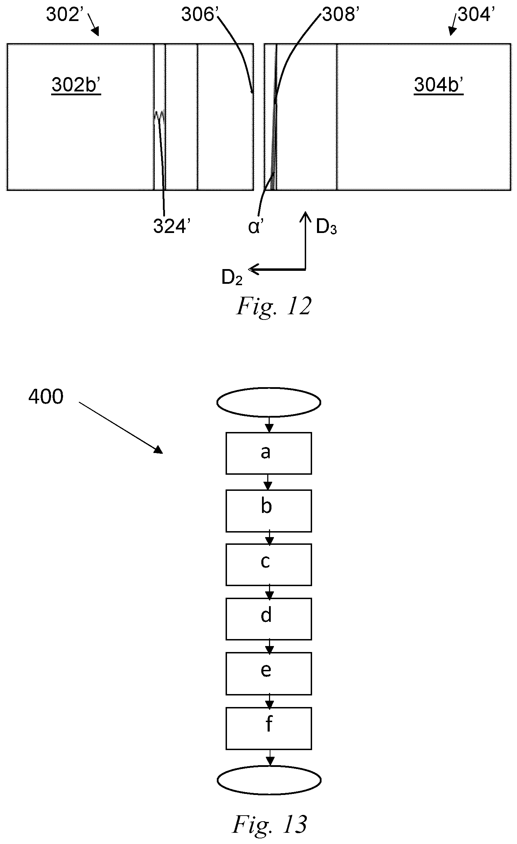

Figures 11 and 12 illustrate an alternative cutting unit 300' according to the invention in a non-operative state, whereby Figure 11 shows a side view and Figure 12 a top view. Most details of the alternative cutting unit 300' correspond to those of the cutting unit 300 described in conjunction with Figures 4-10 and are thus denoted by the same reference number followed by a '-sign.

The alternative cutting unit 300' comprises a first part 302' and a second part 304', which in operation are located on opposite sides of the web tubular web. The first part 302' comprises a first cutting edge 306' and the second part 304' comprises a second cutting edge 308'. The first cutting edge 306' and the second cutting edge 308' are angled in relative to each other by an angle α' as seen in a plane being perpendicular to the direction of travel D₁, as best seen in the top view of Figure 12. Hence, the first and second cutting edges 306', 308' have non-parallel orientations. The angle α' has a size within the same range as the angle α of the embodiment depicted in Figures 4-10.

In the illustrated embodiment, the first cutting edge 306' extends in the width direction D₃, while the second cutting edge 308' is angled by the angle α' in relation to the width direction D₃, i.e. in the plane being perpendicular to the direction of travel D₁, see Figure 12. Alternatively, only the first cutting edge 306' may be angled by the angle α' in relation to the width direction D₃. Yet alternatively, both the first and second cutting edges 306', 308' may be angled in relation to the width direction D₃, such that the sum of their respective angles makes up the angle α.

When the tubular web is to be cut, the first and second cutting edges 306', 308' are moved towards each other in a linear translatory movement in the translation direction D₂ and in a direction opposite to the translation direction D₂, in a corresponding way as for the embodiment depicted in Figures 4-10.

The first cutting edge 306' is formed by an edge of a first blade 311' comprised in the first part 302' of the cutting unit 300'. Correspondingly, the second cutting edge 308' is formed by an edge of a second blade 312' comprised in the second part 304' of the cutting unit 300'.

The first part 302' of the cutting unit 300' comprises a second component 302b', which in turn comprises a first clamping surface 316'. The second part 304' of the cutting unit 300' comprises a second component 304b', which in turn comprises a second clamping surface 318', which faces the first clamping surface 316' as seen in the translation direction D₂. At least one of the first and second clamping surfaces 316', 318' is formed as a separate unit being biased towards the other of the first and second clamping surfaces 316', 318' in the translation direction D₂, in Figure 11 illustrated as the first clamping surface 316' being biased by a first clamping-surface spring 324'. The first and second clamping surfaces 316', 318' are adapted to clamp the tubular web therebetween, when the cutting unit 300' is in use. The first and second clamping surfaces 316', 318' are located before, i.e. upstream of, the first and second cutting edges 306', 308'. In the illustrated embodiment, the second component 304b' of the second part 304' is heated, such that a heat-welded seal may be provided in the tubular web between the first and second clamping surfaces 316', 318'.

There are also provided corresponding clamping surfaces 320', 322' after, i.e. downstream of, the first and second cutting edges 306', 308'. Hence, the second component 302b' of the first part 302' of the cutting unit 300' comprises a third clamping surface 320'. The second component 304b' of the second part 304' comprises a fourth clamping surface 322', which faces the third clamping surface 320' as seen in the translation direction D₂. At least one of the third and fourth clamping surfaces 320', 322' is formed as a separate unit being biased towards the other of the third and fourth clamping surfaces 320', 322' in the translation direction D₂, in Figure 11 illustrated as the fourth clamping surface 322' being biased by a second clamping-surface spring 326'. The second component 302b' of the first part 302' is heated, such that a heat-welded seal may be provided in the tubular web between the third and fourth clamping surfaces 320', 322'.

In a corresponding way as for the embodiment depicted in Figures 4-10, the clamping surfaces 316', 318', 320', 322' are used to hold the tubular web while performing the cut, thereby helping to hold the tubular web in a stretched state. During the final part of the cutting step, the clamping surfaces 316', 318', 320', 322' may thus be able to hold the tubular web in a fixed position in relation to the moving first and second cutting edges 306', 308'.

A method according to the invention for cutting a web of a saliva-permeable packaging material comprises moving at least one of the first cutting edge 306 and the second cutting edge 308 by a linear translatory movement towards and past the other of the first and second cutting edges 306, 308 in the translation direction D₂, thereby providing a gradually progressing cut between the first and second cutting edges 306, 308 as described above. The web 15 is adapted to be advanced in a direction of travel D₁. The method is performed during the portions 23a, 25a of the movement cycles illustrated in Figure 3. The first and second cutting edges 306, 308 are arranged offset to each other and on opposite sides of the web when the cutting unit 300 is in a non-operative state, the first and second cutting edges 306, 308 being angled by an angle α relative to each other as seen in a plane being perpendicular to the direction D₁ of travel of the web.

Figure 13 illustrates a method 400 for manufacturing a pouched product for oral use. The method comprises:
a) providing a tubular web 15 of a saliva-permeable packaging material,
b) providing the tubular web 15 with a first transverse seal 27,
c) supplying a portion of a filling material 11 through the tubular web 15,
d) advancing the tubular web 15 in the direction of travel D₁,
e) providing the tubular web 15 with a second transverse seal 31 thereby forming a pouched product 33,
f) separating the pouched product 33 from a subsequent pouched product 29 by means of the method according to the invention for cutting a web.

The method is preferably performed by an apparatus as described herein. For details of the method steps, please see also the description of the corresponding parts of the apparatus. The tubular web 15 may be moving continuously when performing the method.

Step e) of providing the second transverse seal for the pouched product may be performed in the same operation step as step b) of providing the first transverse seal for the subsequent product, e.g. by using the first, second, third and fourth clamping surfaces described herein for providing the first and second transverse seals.

Step f) may be performed by separating the pouched product 33 from the subsequent pouched product 29 in an interspace between the second transverse seal 31 for the pouched product and the first transverse seal 27 for the subsequent product 29.

Step f) may be performed at least partly in the same operation step as steps b) and e). This may be done by making the final part of the cut with the web 15 clamped by the first and second clamping surfaces 316, 318, and optionally between the optional third and fourth clamping surfaces 320, 322 described herein. In that case, it is preferable that the first and second components 302a, 302b of the first part 302 are moved together and that the first and second components 304a, 304b of the second part 304 are moved together, as is illustrated in the embodiment shown in Figures 4-10. This makes it possible to use a low number of movable parts in the cutting unit 300 described herein, which combines the transverse sealing unit and the separation unit.

Alternatively, step f) may be performed when step e) is finished. In that case, it is preferable that the first component 302a of the first part 302 of the cutting unit 300 is movable independently of the second component 302b, at least in the translation direction D₂. Correspondingly for the second part 304 of the cutting unit 300, it is preferable that the first component 304a is movable independently of the second component 304b, at least in the translation direction D₂.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A cutting unit (300) for cutting a web (15) of a saliva-permeable packaging material, said web (15) being adapted to be advanced in a direction of travel (D₁) through said cutting unit (300), said cutting unit (300) comprising
- a first part (302), having a first cutting edge (306), and
- a second part (304), having a second cutting edge (308),
said first and second cutting edges (306, 308) being arranged offset to each other and adapted to be on opposite sides of said web when said cutting unit (300) is in a non-operative state,
at least one of said first and second cutting edges (306, 308) being linear translatory movable towards and past the other of said first and second cutting edges (306, 308) in a translation direction (D₂) being angled, preferably perpendicularly angled, to said direction of travel (D₁),
**characterized in**
said first and second cutting edges (306, 308) being angled by an angle α relative to each other as seen in a plane being perpendicular to said direction of travel (D₁).

2. The cutting unit (300) according to claim 1, wherein said angle α between said first and second cutting edges (306, 308) as seen in said plane being perpendicular to said direction of travel (D₁), is within the range of 0° < α ≤ 30°, preferably 1° ≤ α ≤ 20°, more preferably 3° ≤ α ≤ 15°, most preferably 5° ≤ α ≤ 10°.

3. The cutting unit (300) according to any one of the preceding claims, wherein said first cutting edge (306) is formed by an edge of a blade comprised in said first part (302) of said cutting unit (300) and/or said second cutting edge (308) is formed by an edge of a blade (312) comprised in said second part (304) of said cutting unit (300).

4. The cutting unit (300) according to any one of the preceding claims further comprising a biasing means (314a, 314b) adapted to bias one of said first or second cutting edges (306, 308) towards the other of said first or second cutting edges (306, 308) in said direction of travel (D₁).

5. The cutting unit (300) according to any one of the preceding claims, wherein said first part (302) comprises a first clamping surface (316), located at or adjacent to said first cutting edge (306), said second part (304) comprises a second clamping surface (318), located at or adjacent to said second cutting edge (308), said second clamping surface (318) facing said first clamping surface (316) as seen in said translation direction (D₂), said first and second clamping surfaces (316, 318) being adapted to clamp said web (15) therebetween.

6. The cutting unit (300) according to claim 5, wherein said first part (302) comprises a third clamping surface (320), located at or adjacent to said first cutting edge (306), and said second part (304) comprises a fourth clamping surface (322), located at or adjacent to said second cutting edge (308), said fourth clamping surface (322) facing said third clamping surface (320) as seen in said translation direction (D₂), said third and fourth clamping surfaces (320, 322) being adapted to clamp said web (15) therebetween,
wherein said first and second clamping surfaces (316, 318) are located before said first and second cutting edges (306, 308) and said third and fourth clamping surfaces (320, 322) are located after said first and second cutting edges (306, 308) as seen along said direction of travel (D₁).

7. The cutting unit (300) according to claim 5 or 6, wherein at least one of said first and second clamping surfaces (316, 318) and/or at least one of said third and fourth clamping surfaces (320, 322), when dependent on claim 6, is adapted for providing a transverse seal (27, 31) to said web (15), e.g. at least one of said first part (302') or said second part (304') of said cutting unit (300'), or a portion thereof, being heated and thus adapted for providing a heat-welded transverse seal, or said first and second clamping surfaces (316, 318) and/or said third and fourth clamping surfaces (320, 322), when dependent on claim 6, forming an ultrasonic welding unit.

8. The cutting unit (300) according to any one of the preceding claims, wherein said cutting unit (300) further comprises a translation guide (310) extending in said translation direction (D₂), wherein at least one of said first and second cutting edges (306, 308) is linear translatory movable towards and past the other of said first and second cutting edges (306, 308) by a movement guided by said translation guide (310), preferably said translation guide (310) being comprised in one of said first and second parts (302, 304) of said cutting unit (300).

9. The cutting unit (300) according to claim 8, wherein said translation guide (310) forms an integral unit with a component comprising said first cutting edge (306), such as a first component (302a) of said first part (302), or with a component comprising said second cutting edge (308), such as a first component (304a) of said second part (304).

10. The cutting unit (300) according to claim 6, or any one of claims 7-9 when dependent on claim 6, wherein said first and third clamping surfaces (316, 320) are comprised in a second component (302b) of said first part (302) and/or wherein said second and fourth clamping surfaces (318, 322) are comprised in a second component (304b) of said second part (304), preferably at least one of said second components (302b, 304b) being biased in said translation direction (D₂), e.g. by means of a second-component spring (302c), and/or wherein at least one of said first, second, third or fourth clamping surfaces (316', 318', 320', 322') is formed as a separate unit being biased in said translation direction (D₂), e.g. by means of a clamping-surface spring (324', 326').

11. An apparatus (1) for manufacturing a pouched product (201) for oral use, said apparatus (1) comprising
- a first supplying unit (3, 13) for supplying a tubular web (15) of a saliva-permeable packaging material,
- a second supplying unit (9) for supplying a filling material (5),
- a transverse sealing unit for providing said tubular web (15) with a transverse seal (27, 31) thereby forming a pouched product (29, 33), and
- a separation unit for separating said pouched product (33) from a subsequent pouched product (29) at or adjacent to said transverse seal (27, 31),
**characterized in**
said separation unit comprising, being constituted by or forming part of a cutting unit (300) according to any one of the preceding claims.

12. The apparatus (1) according to claim 11, wherein said separation unit and said transverse sealing unit together comprise, are constituted by or form part of said cutting unit (300).

13. The apparatus (1) according to claim 11 or 12, wherein said cutting unit (300) is configured to travel together with said web (15) for a predeterminable distance.

14. A method for cutting a web (15) of a saliva-permeable packaging material, said web (15) being adapted to be advanced in a direction of travel (D₁), said method comprising moving at least one of a first cutting edge (306) and a second cutting edge (308) by a linear translatory movement towards and past the other of said first and second cutting edges (306, 308) in a translation direction (D₂) being angled, preferably perpendicularly angled, to said direction of travel (D₁) thereby providing a gradually progressing cut between said first and second cutting edges (306, 308),
wherein said first and second cutting edges (306, 308) are arranged offset to each other and on opposite sides of said web when a cutting unit (300) comprising said first and second cutting edges (306, 308) is in a non-operative state, and said first and second cutting edges (306, 308) are angled by an angle α relative to each other as seen in a plane being perpendicular to said direction of travel (D₁).

15. A method (400) for manufacturing a pouched product (201) for oral use, said method comprising:
a) providing a tubular web (15) of a saliva-permeable packaging material,
b) providing said tubular web (15) with a first transverse seal (27),
c) supplying a portion of a filling material (11) through said tubular web (15),
d) advancing said tubular web (15) in a direction of travel (D₁),
e) providing said tubular web (15) with a second transverse seal (31) thereby forming a pouched product (33),
f) separating said pouched product (33) from a subsequent pouched product (29) by means of the method according to claim 14.

16. The method according to claim 15, wherein step e) of providing said second transverse seal (31) for said pouched product (33) is performed in the same operation step as step b) of providing said first transverse seal (27) for said subsequent product (29), and wherein step f) is performed by separating said pouched product (33) from said subsequent pouched product (29) in an interspace between said second transverse seal (31) for said pouched product (33) and said first transverse seal (27) for said subsequent product (29), preferably step f) being performed at least partly in the same operation step as steps b) and e).

## Patentansprüche

1. Schneideinheit (300) zum Schneiden einer Bahn (15) eines speicheldurchlässigen Verpackungsmaterials, wobei die Bahn (15) adaptiert ist, um in einer Bewegungsrichtung (D₁) durch die Schneideinheit (300) vorwärts bewegt zu werden, wobei die Schneideinheit (300) Folgendes umfasst
- ein erstes Teil (302), das einen ersten Schneidrand (306) aufweist, und
- ein zweites Teil (304), das einen zweiten Schneidrand (308) aufweist,
wobei der erste und der zweite Schneidrand (306, 308) versetzt zueinander angeordnet und adaptiert sind, um sich auf gegenüberliegenden Seiten der Bahn zu befinden, wenn sich die Schneideinheit (300) in einem nicht betriebsbereiten Zustand befindet,
mindestens einer der ersten und zweiten Schneidränder (306, 308) linear in Richtung und vorbei an dem anderen des ersten und zweiten Schneidrands (306, 308) in einer Translationsrichtung (D₂) verschiebbar beweglich ist, die winklig, vorzugsweise rechtwinklig, zur Bewegungsrichtung (D₁) verläuft,
**dadurch gekennzeichnet, dass**
die ersten und zweiten Schneidränder (306, 308) um einen Winkel α relativ zueinander abgewinkelt sind, gesehen in einer Ebene, die senkrecht zur Bewegungsrichtung (D₁) ist.

2. Schneideinheit (300) nach Anspruch 1, wobei der Winkel α zwischen dem ersten und dem zweiten Schneidrand (306, 308), gesehen in der Ebene senkrecht zur Bewegungsrichtung (D₁), innerhalb des Bereichs von 0° < α ≤ 30°, vorzugsweise 1° ≤ α ≤ 20°, vorzugsweise 3° ≤ α ≤ 15°, am meisten bevorzugt 5° ≤ α ≤ 10° ist.

3. Schneideinheit (300) nach einem der vorstehenden Ansprüche, wobei der erste Schneidrand (306) durch einen Rand einer Klinge ausgebildet ist, die in dem ersten Teil (302) der Schneideinheit (300) enthalten ist, und/oder der zweite Schneidrand (308) durch einen Rand einer Klinge (312) ausgebildet ist, die in dem zweiten Teil (304) der Schneideinheit (300) enthalten ist.

4. Schneideinheit (300) nach einem der vorstehenden Ansprüche, weiter umfassend ein Vorspannmittel (314a, 314b), das adaptiert ist, um eine der ersten oder zweiten Schneidränder (306, 308) in Richtung der anderen der ersten oder zweiten Schneidränder (306, 308) in der Bewegungsrichtung (D₁) vorzuspannen.

5. Schneideinheit (300) nach einem der vorstehenden Ansprüche, wobei das erste Teil (302) eine erste Klemmoberfläche (316) umfasst, die am oder angrenzend an den ersten Schneidrand (306) lokalisiert ist, das zweite Teil (304) eine zweite Klemmoberfläche (318) umfasst, die an oder angrenzend an den zweiten Schneidrand (308) lokalisiert ist, wobei die zweite Klemmoberfläche (318) der ersten Klemmoberfläche (316) in der Translationsrichtung (D₂) zugewandt ist, wobei die erste und zweite Klemmoberfläche (316, 318) adaptiert sind, um die Bahn (15) dazwischen zu klemmen.

6. Schneideinheit (300) nach Anspruch 5, wobei das erste Teil (302) eine dritte Klemmoberfläche (320) umfasst, die an oder angrenzend an den ersten Schneidrand (306) lokalisiert ist, und das zweite Teil (304) eine vierte Klemmoberfläche (322) umfasst, die an oder angrenzend an den zweiten Schneidrand (308) lokalisiert ist, wobei die vierte Klemmoberfläche (322) der dritten Klemmoberfläche (320) in der Translationsrichtung (D₂) zugewandt ist, wobei die dritte und vierte Klemmoberfläche (320, 322) adaptiert sind, um die Bahn (15) dazwischen zu klemmen, wobei die erste und die zweite Klemmoberfläche (316, 318) vor dem ersten und dem zweiten Schneidrand (306, 308) lokalisiert sind und die dritte und die vierte Klemmoberfläche (320, 322) nach dem ersten und dem zweiten Schneidrand (306, 308) lokalisiert sind, gesehen entlang der Bewegungsrichtung (D₁).

7. Schneideinheit (300) nach Anspruch 5 oder 6, wobei mindestens eine der ersten und zweiten Klemmoberflächen (316, 318) und/oder mindestens eine der dritten und vierten Klemmoberfläche (320, 322), wenn abhängig von Anspruch 6, zum Bereitstellen einer Querversiegelung (27, 31) an der Bahn (15), wobei z. B. mindestens eines des ersten Teils (302') oder des zweiten Teils (304') der Schneideinheit (300') oder ein Abschnitt davon beheizt wird und daher adaptiert ist, um eine wärmegeschweißte Querversiegelung bereitzustellen adaptiert ist, oder die erste und zweite Klemmoberfläche (316, 318) und/oder die dritte und vierte Klemmoberfläche (320, 322), wenn von Anspruch 6 abhängig, eine Ultraschall-Schweißeinheit ausbilden.

8. Schneideinheit (300) nach einem der vorstehenden Ansprüche, wobei die Schneideinheit (300) weiter eine Translationsführung (310) umfasst, die sich in der Translationsrichtung (D₂) erstreckt, wobei mindestens einer des ersten und zweiten Schneidrands (306, 308) durch eine von der Translationsführung (310) geführte Bewegung linear translatorisch in Richtung des anderen des ersten und zweiten Schneidrands (306, 308) und an diesem vorbei verschiebbar beweglich ist, wobei die Translationsführung (310) vorzugsweise in einem des ersten und zweiten Teils (302, 304) der Schneideinheit (300) enthalten ist.

9. Schneideinheit (300) nach Anspruch 8, wobei die Translationsführung (310) eine integrale Einheit mit einer Komponente ausbildet, die den ersten Schneidrand (306) umfasst, wie einer ersten Komponente (302a) des ersten Teils (302), oder mit einer Komponente, die den zweiten Schneidrand (308) umfasst, wie einer ersten Komponente (304a) des zweiten Teils (304).

10. Schneideinheit (300) nach Anspruch 6, oder einer der Ansprüche 7-9, wenn von Anspruch 6 abhängig, wobei die erste und dritte Klemmoberfläche (316, 320) in einer zweiten Komponente (302b) des ersten Teils (302) enthalten sind und/oder wobei die zweite und vierte Klemmoberfläche (318, 322) in einer zweiten Komponente (304b) des zweiten Teils (304) enthalten sind, wobei vorzugsweise mindestens eine der zweiten Komponenten (302b, 304b) in der Translationsrichtung (D₂) vorgespannt ist, z. B. mittels einer Feder (302c) der zweiten Komponente, und/oder wobei mindestens eine der ersten, zweiten, dritten oder vierten Klemmoberflächen (316', 318', 320', 322') als eine separate Einheit ausgebildet ist, die in der Translationsrichtung (D₂) vorgespannt ist, z. B. mittels einer Klemmoberflächenfeder (324', 326').

11. Einrichtung (1) zum Herstellen eines beutelartig Produkts (201) zur oralen Verwendung, wobei die Einrichtung (1) Folgendes umfasst
- eine erste Zuführeinheit (3, 13) zum Zuführen einer schlauchförmigen Bahn (15) aus einem speicheldurchlässigen Verpackungsmaterial,
- eine zweite Zuführeinheit (9) zum Zuführen eines Füllmaterials (5),
- eine Querversiegelungseinheit zum Bereitstellen der schlauchförmigen Bahn (15) mit einer Querversiegelung (27, 31), wodurch ein beutelartiges Produkt (29, 33) ausgebildet wird, und
- eine Trenneinheit zum Trennen des beutelartigen Produkts (33) von einem nachfolgenden beutelartigen Produkt (29) an oder angrenzend an die Querversiegelung (27, 31),
**dadurch gekennzeichnet, dass**
die Trenneinheit eine Schneideinheit (300) nach einem der vorstehenden Ansprüche umfasst, von ihr gebildet wird oder einen Teil von ihr ausbildet.

12. Einrichtung (1) nach Anspruch 11, wobei die Trenneinheit und die Querversiegelungseinheit zusammen die Schneideinheit (300) umfassen, von ihr gebildet werden oder einen Teil von ihr ausbilden.

13. Einrichtung (1) nach Anspruch 11 oder 12, wobei die Schneideinheit (300) konfiguriert ist, um sich zusammen mit der Bahn (15) über einen vorbestimmbaren Abstand zu bewegen.

14. Verfahren zum Schneiden einer Bahn (15) aus einem speicheldurchlässigen Verpackungsmaterial, wobei die Bahn (15) adaptiert ist, um in einer Bewegungsrichtung (D₁) vorgeschoben zu werden, wobei das Verfahren Bewegen mindestens eines aus einem ersten Schneidrand (306) und einem zweiten Schneidrand (308) durch eine lineare Translationsbewegung in Richtung und vorbei an dem anderen der ersten und zweiten Schneidränder (306, 308) in einer Translationsrichtung (D₂) umfasst, die winklig, vorzugsweise rechtwinklig, zu der Bewegungsrichtung (D₁) ist, wodurch ein allmählich fortschreitender Schnitt zwischen dem ersten und dem zweiten Schneidrand (306, 308) bereitgestellt wird,
wobei der erste und zweite Schneidrand (306, 308) versetzt zueinander und auf gegenüberliegenden Seiten der Bahn angeordnet sind, wenn sich eine die ersten und zweiten Schneidränder (306, 308) umfassende Schneideinheit (300) in einem nicht betriebsfähigen Zustand befindet, und die ersten und zweiten Schneidränder (306, 308) um einen Winkel α relativ zueinander abgewinkelt sind, gesehen in einer Ebene, die senkrecht zu der Bewegungsrichtung (D₁) ist.

15. Verfahren (400) zum Herstellen eines beutelartigen Produkts (201) zur oralen Verwendung, wobei das Verfahren Folgendes umfasst:
a) Bereitstellen einer schlauchförmigen Bahn (15) aus einem speicheldurchlässigen Verpackungsmaterial,
b) Bereitstellen der schlauchförmigen Bahn (15) mit einer ersten Querversiegelung (27),
c) Zuführen eines Abschnitts eines Füllmaterials (11) durch die schlauchförmige Bahn (15),
d) Vorschieben der schlauchförmigen Bahn (15) in einer Bewegungsrichtung (D₁),
e) Bereitstellen der schlauchförmigen Bahn (15) mit einer zweiten, quer verlaufenden Dichtung (31), wodurch ein beutelartiges Produkt (33) ausgebildet wird,
f) Trennen des beutelartigen Produkts (33) von einem nachfolgenden beutelartigen Produkt (29) mittels des Verfahrens nach Anspruch 14.

16. Verfahren nach Anspruch 15, wobei der Schritt e) des Bereitstellens der zweiten Querversiegelung (31) für das beutelartige Produkt (33) in demselben Arbeitsschritt wie der Schritt b) des Bereitstellens der ersten Querversiegelung (27) für das nachfolgende Produkt (29) durchgeführt wird, und wobei Schritt f) durchgeführt wird, indem das beutelartige Produkt (33) von dem nachfolgenden beutelartigen Produkt (29) in einem Zwischenraum zwischen der zweiten Querversiegelung (31) für das beutelartige Produkt (33) und der ersten Querversiegelung (27) für das nachfolgende Produkt (29) getrennt wird, wobei vorzugsweise Schritt f) mindestens teilweise in demselben Arbeitsschritt wie die Schritte b) und e) durchgeführt wird.

## Revendications

1. Unité de coupe (300) pour couper une bande (15) d'un matériau d'emballage perméable à la salive, ladite bande (15) étant adaptée pour être avancée dans une direction de déplacement (D₁) à travers ladite unité de coupe (300), ladite unité de coupe (300) comprenant
- une première partie (302), présentant un premier bord de coupe (306), et
- une deuxième partie (304), présentant un deuxième bord de coupe (308),
lesdits premier et deuxième bords de coupe (306, 308) étant agencés décalés l'un par rapport à l'autre et adaptés pour être sur des côtés opposés de ladite bande lorsque ladite unité de coupe (300) est dans un état non opérationnel,
au moins l'un desdits premier et deuxième bords de coupe (306, 308) étant mobile en translation linéaire vers et au-delà de l'autre desdits premier et deuxième bords de coupe (306, 308) dans une direction de translation (D₂) inclinée, de préférence inclinée perpendiculairement, par rapport à ladite direction de déplacement (D₁),
**caractérisée en ce que**
lesdits premier et deuxième bords de coupe (306, 308) sont inclinés selon un angle a l'un par rapport à l'autre dans une vue dans un plan perpendiculaire à ladite direction de déplacement (D₁).

2. Unité de coupe (300) selon la revendication 1, dans laquelle ledit angle a entre lesdits premier et deuxième bords de coupe (306, 308) dans une vue dans ledit plan perpendiculaire à ladite direction de déplacement (D₁) est dans la plage de 0° < α ≤ 30°, préférentiellement 1° ≤ α ≤ 20°, plus préférentiellement 3° ≤ α ≤ 15°, le plus préférentiellement 5° ≤ α ≤ 10°.

3. Unité de coupe (300) selon l'une quelconque des revendications précédentes, dans laquelle ledit premier bord de coupe (306) est formé par un bord d'une lame comprise dans ladite première partie (302) de ladite unité de coupe (300) et/ou ledit deuxième bord de coupe (308) est formé par un bord d'une lame (312) comprise dans ladite deuxième partie (304) de ladite unité de coupe (300).

4. Unité de coupe (300) selon l'une quelconque des revendications précédentes comprenant en outre un moyen de sollicitation (314a, 314b) adapté pour solliciter l'un desdits premier ou deuxième bords de coupe (306, 308) vers l'autre desdits premier ou deuxième bords de coupe (306, 308) dans ladite direction de déplacement (D₁).

5. Unité de coupe (300) selon l'une quelconque des revendications précédentes, dans laquelle ladite première partie (302) comprend une première surface de serrage (316), située au niveau de ou de manière adjacente audit premier bord de coupe (306), ladite deuxième partie (304) comprend une deuxième surface de serrage (318), située au niveau de ou de manière adjacente audit deuxième bord de coupe (308), ladite deuxième surface de serrage (318) faisant face à ladite première surface de serrage (316) dans une vue dans ladite direction de translation (D₂), lesdites première et deuxième surfaces de serrage (316, 318) étant adaptées pour serrer ladite bande (15) entre elles.

6. Unité de coupe (300) selon la revendication 5, dans laquelle ladite première partie (302) comprend une troisième surface de serrage (320), située au niveau de ou de manière adjacente audit premier bord de coupe (306), et ladite deuxième partie (304) comprend une quatrième surface de serrage (322), située au niveau de ou de manière adjacente audit deuxième bord de coupe (308), ladite quatrième surface de serrage (322) faisant face à ladite troisième surface de serrage (320) dans une vue dans ladite direction de translation (D₂), lesdites troisième et quatrième surfaces de serrage (320, 322) étant adaptées pour serrer ladite bande (15) entre elles,
dans laquelle lesdites première et deuxième surfaces de serrage (316, 318) sont situées avant lesdits premier et deuxième bords de coupe (306, 308) et lesdites troisième et quatrième surfaces de serrage (320, 322) sont situées après lesdits premier et deuxième bords de coupe (306, 308) dans une vue le long de ladite direction de déplacement (D₁).

7. Unité de coupe (300) selon la revendication 5 ou la revendication 6, dans laquelle au moins l'une desdites première et deuxième surfaces de serrage (316, 318) et/ou au moins l'une desdites troisième et quatrième surfaces de serrage (320, 322), lorsqu'elles dépendent de la revendication 6, sont adaptées pour fournir un joint transversal (27, 31) à ladite bande (15), par exemple au moins une de ladite première partie (302') ou de ladite deuxième partie (304') de ladite unité de coupe (300'), ou une partie de celle-ci, étant chauffée et ainsi adaptée pour fournir un joint transversal soudé à chaud, ou lesdites première et deuxième surfaces de serrage (316, 318) et/ou lesdites troisième et quatrième surfaces de serrage (320, 322), lorsqu'elles dépendent de la revendication 6, formant une unité de soudage par ultrasons.

8. Unité de coupe (300) selon l'une quelconque des revendications précédentes, dans laquelle ladite unité de coupe (300) comprend en outre un guide de translation (310) s'étendant dans ladite direction de translation (D₂), dans laquelle au moins l'un desdits premier et deuxième bords de coupe (306, 308) est mobile en translation linéaire vers et au-delà de l'autre desdits premier et deuxième bords de coupe (306, 308) par un mouvement guidé par ledit guide de translation (310), de préférence ledit guide de translation (310) étant compris dans l'une desdites première et deuxième parties (302, 304) de ladite unité de coupe (300).

9. Unité de coupe (300) selon la revendication 8, dans laquelle ledit guide de translation (310) forme une unité intégrale avec un composant comprenant ledit premier bord de coupe (306), tel qu'un premier composant (302a) de ladite première partie (302), ou avec un composant comprenant ledit deuxième bord de coupe (308), tel qu'un premier composant (304a) de ladite deuxième partie (304).

10. Unité de coupe (300) selon la revendication 6, ou l'une quelconque des revendications 7 à 9 lorsqu'elles dépendent de la revendication 6, dans laquelle lesdites première et troisième surfaces de serrage (316, 320) sont comprises dans un deuxième composant (302b) de ladite première partie (302) et/ou dans laquelle lesdites deuxième et quatrième surfaces de serrage (318, 322) sont comprises dans un deuxième composant (304b) de ladite deuxième partie (304), de préférence au moins l'un desdits deuxièmes composants (302b, 304b) étant sollicité dans ladite direction de translation (D₂), par exemple au moyen d'un ressort (302c) de deuxième composant, et/ou dans laquelle au moins l'une desdites première, deuxième, troisième ou quatrième surfaces de serrage (316', 318', 320', 322') est formée comme une unité séparée sollicitée dans ladite direction de translation (D₂), par exemple au moyen d'un ressort (324', 326') de surface de serrage.

11. Appareil (1) pour fabriquer un produit en sachet (201) à usage oral, ledit appareil (1) comprenant
- une première unité d'amenée (3, 13) pour amener une bande tubulaire (15) d'un matériau d'emballage perméable à la salive,
- une deuxième unité d'amenée (9) pour amener un matériau de remplissage (5),
- une unité d'étanchéité transversale pour doter ladite bande tubulaire (15) d'un joint transversal (27, 31) formant ainsi un produit en sachet (29, 33), et
- une unité de séparation pour séparer ledit produit en sachet (33) d'un produit en sachet (29) suivant au niveau de ou de manière adjacente audit joint transversal (27, 31),
**caractérisé en ce que**
ladite unité de séparation comprend, est constituée par ou fait partie d'une unité de coupe (300) selon l'une quelconque des revendications précédentes.

12. Appareil (1) selon la revendication 11, dans lequel ladite unité de séparation et ladite unité d'étanchéité transversale comprennent ensemble, sont constituées par ou font partie de ladite unité de coupe (300).

13. Appareil (1) selon la revendication 11 ou la revendication 12, dans lequel ladite unité de coupe (300) est configurée pour se déplacer conjointement avec ladite bande (15) sur une distance prédéterminable.

14. Procédé pour couper une bande (15) d'un matériau d'emballage perméable à la salive, ladite bande (15) étant adaptée pour être avancée dans une direction de déplacement (D₁), ledit procédé comprenant le déplacement d'au moins un d'un premier bord de coupe (306) et d'un deuxième bord de coupe (308) par un mouvement de translation linéaire vers et au-delà de l'autre desdits premier et deuxième bords de coupe (306, 308) dans une direction de translation (D₂) inclinée, de préférence inclinée perpendiculairement, par rapport à ladite direction de déplacement (D₁) fournissant ainsi une coupe progressive entre lesdits premier et deuxième bords de coupe (306, 308),
dans lequel lesdits premier et deuxième bords de coupe (306, 308) sont agencés décalés l'une par rapport à l'autre et sur des côtés opposés de ladite bande lorsqu'une unité de coupe (300) comprenant lesdits premier et deuxième bords de coupe (306, 308) est dans un état non opérationnel, et lesdits premier et deuxième bords de coupe (306, 308) sont inclinés d'un angle α l'un par rapport à l'autre dans une vue dans un plan perpendiculaire à ladite direction de déplacement (D₁).

15. Procédé (400) pour fabriquer un produit en sachet (201) à usage oral, ledit procédé comprenant :
a) la fourniture d'une bande tubulaire (15) d'un matériau d'emballage perméable à la salive,
b) le fait de doter ladite bande tubulaire (15) d'un premier joint transversal (27),
c) l'amenée d'une portion d'un matériau de remplissage (11) à travers ladite bande tubulaire (15),
d) l'avancement de ladite bande tubulaire (15) dans une direction de déplacement (D₁),
e) le fait de doter ladite bande tubulaire (15) d'un deuxième joint transversal (31) formant ainsi un produit en sachet (33),
f) la séparation dudit produit en sachet (33) d'un produit en sachet (29) suivant au moyen du procédé selon la revendication 14.

16. Procédé selon la revendication 15, dans lequel l'étape e) de fourniture dudit deuxième joint transversal (31) pour ledit produit en sachet (33) est réalisée dans la même étape d'opération que l'étape b) de fourniture dudit premier joint transversal (27) pour ledit produit (29) suivant, et dans lequel l'étape f) est réalisée par séparation dudit produit en sachet (33) dudit produit en sachet (29) suivant dans un interstice entre ledit deuxième joint transversal (31) pour ledit produit en sachet (33) et ledit premier joint transversal (27) pour ledit produit (29) suivant, de préférence l'étape f) étant réalisée au moins en partie dans la même étape d'opération que les étapes b) et e).
